# FASCICULE DE BREVET EUROPEEN

(11) **EP 0 748 932 B1**
(45) Date de publication et mention de la délivrance du brevet: **26.05.1999**
(21) Numéro de dépôt: 96401254.6
(22) Date de dépôt: 11.06.1996
(51) Int. Cl.: F02K 1/12, F02K 1/80

(54) **Tuyère à col à géométrie variable**
Düse mit einem Hals mit veränderlicher Geometrie
Nozzle with variable throat geometry

(30) Priorité: 16.06.1995 FR 9507205
(43) Date de publication de la demande: 18.12.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Indersie, Dominique, 27200 Vernon (FR); Huck, André, 27950 Saint Just (FR)
(74) Mandataire: Thévenet, Jean-Bruno

(56) Documents cités:
- EP-A- 0 541 346
- GB-A- 892 289
- GB-A- 2 063 189
- GB-A- 2 265 676
- US-A- 2 625 008
- US-A- 4 073 441
- US-A- 4 917 302
- US-A- 5 111 550

## Description

### Domaine de l'invention

La présente invention concerne une tuyère à col à géométrie variable, comprenant des parois fixes définissant une chambre de combustion de section rectangulaire ou carrée, et au moins un ensemble déformable de panneaux mobiles articulés reliés aux parois fixes pour définir de façon sélective un col sonique modifiant la section de passage des gaz chauds issus de la chambre de combustion.

### Art antérieur

Dans une chambre de combustion de section rectangulaire ou carrée d'une tuyère d'un moteur à réaction destiné à fonctionner soit en mode de propulsion subsonique, soit en mode de propulsion supersonique, la section de passage des gaz chauds issus de la chambre de combustion doit être modifiée en vol au niveau du col sonique lors du passage d'un mode de propulsion à l'autre.

Pour cela, on a déjà proposé divers systèmes de panneaux mobiles articulés entraînés par des vérins. Les réalisations proposées à ce jour sont en général complexes et impliquent à la fois des mouvements de translation et de rotation des divers panneaux mobiles articulés ou présentent des difficultés d'étanchéité, de refroidissement ou de liaison avec les parties de structure restant fixes.

### Objet et description succincte de l'invention

La présente invention vise à remédier aux inconvénients précités et à permettre de modifier en vol, de façon simple et sûre, la géométrie du col sonique de passage des gaz chauds dans une tuyère d'engin destiné à présenter divers modes de fonctionnement lors d'une même mission.

Ces but sont atteints, conformément à l'invention, grâce à une tuyère à col à géométrie variable, comprenant des parois fixes définissant une chambre de combustion de section rectangulaire ou carrée, et au moins un ensemble déformable de panneaux mobiles articulés reliés aux parois fixe pour définir de façon sélective un col sonique modifiant la section de passage des gaz chauds issus de la chambre de combustion,
caractérisée en ce que l'ensemble déformable comprend au moins un panneau amont plan dont une extrémité amont est articulée autour d'un axe par rapport à une paroi fixe amont de la tuyère, un panneau intermédiaire arqué en forme de portion de cylindre, capable de s'escamoter derrière le panneau amont plan et un panneau aval plan dont une extrémité amont est articulée autour d'un axe par rapport au panneau intermédiaire arqué et une extrémité aval est articulée autour d'un axe par rapport à une paroi fixe aval de la tuyère, en ce que le panneau intermédiaire arqué est articulé autour d'un axe présentant une position prédéterminée par rapport au panneau amont plan et en ce que les mouvements de déplacement des panneaux de l'ensemble déformable sont commandés à partir d'un système d'entraînement unique agissant sur le panneau amont plan.

Selon une variante de réalisation, le panneau intermédiaire arqué est également conçu de manière à pouvoir s'escamoter partiellement derrière le panneau aval plan.

Avantageusement, le système d'entraînement unique comprend au moins deux vérins situés dans un même plan parallèle aux axes d'articulation des différents panneaux de l'ensemble déformable.

Selon un aspect particulier de l'invention, les panneaux mobiles articulés sont munis de canaux de refroidissement parcourus par un fluide de refroidissement.

Dans ce cas, les panneaux mobiles articulés comprennent chacun une cavité délimitée par des joints, située au voisinage du panneau mobile adjacent et assurant le passage du fluide de refroidissement entre les canaux des différents panneaux.

### Brève description des dessins

D'autres caractéristiques et avantages de l'invention ressortiront de la description suivante de modes particuliers de réalisation, donnés à titre d'exemples non limitatifs, en référence aux dessins annexés, sur lesquels :
- la Figure 1 est une vue schématique en perspective montrant les éléments essentiels d'une tuyère à col à géométrie variable conforme à l'invention, les panneaux mobiles étant en position déployée ;
- la Figure 2 est une vue en coupe selon un plan axial vertical de la Figure 1 montrant les panneaux mobiles en position déployée ;
- la Figure 3 est une vue analogue à celle de la Figure 2, mais montrant les panneaux mobiles en position rétractée ;
- la Figure 4 est une vue en perspective de panneaux articulés applicables à la tuyère de la Figure 1 et munis de moyens de refroidissement ;
- la Figure 5 est une vue en coupe selon le plan V-V de la Figure 4, montrant les panneaux articulés en position alignée,
- la Figure 6 est une vue analogue à celle de la Figure 5, mais montrant des panneaux articulés dans des positions relatives différentes les unes par rapport aux autres ;
- la Figure 7 est une vue en perspective du panneau articulé amont selon le mode de réalisation des Figures 4 à 6 ;
- la Figure 8 est une vue de détail en coupe selon un plan axial horizontal de la Figure 1 montrant une variante de réalisation du panneau articulé amont ;
- la Figure 9 est une vue partielle en élévation montrant une liaison entre des panneaux articulés aval et intermédiaire selon une variante du mode de réalisation des Figures 4 à 6 mettant en oeuvre des joints racleurs, et
- la Figure 9A est une section selon la ligne IXA-IXA de la Figure 9.

### Description détaillée de modes particuliers de réalisation

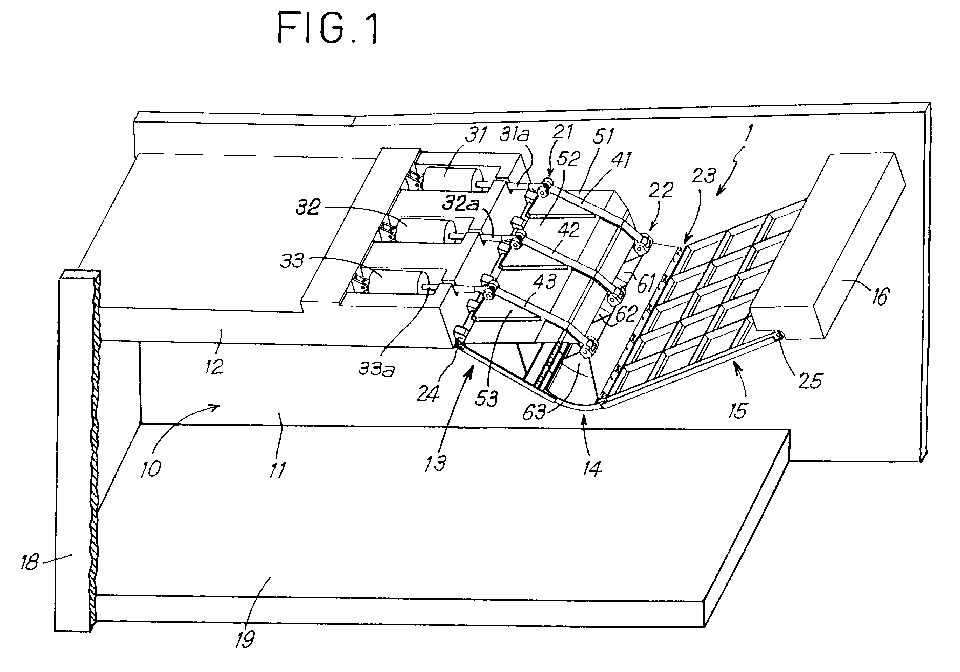

Si l'on considère en premier lieu la Figure 1, on voit de façon schématique des parois fixes opposées deux à deux 11,18 et 12,19 qui définissent un corps de tuyère 10 de section rectangulaire, pouvant être carrée, pour recevoir des gaz de combustion d'une chambre de combustion amont à section rectangulaire ou carrée.

Dans la configuration du dessin de la Figure 1, on qualifiera les parois fixes 11 et 18 de verticales et les parois 12 et 19 d'horizontales.

On remarque que, dans cet exemple, la paroi horizontale inférieure 19 s'étend sur toute la longueur de la tuyère 10 sans présenter de partie saillante. En revanche, la paroi horizontale supérieure 12 est interrompue dans sa partie aval, seule une paroi horizontale supérieure fixe 16 de faible longueur étant présente à l'extrémité aval de la tuyère 10.

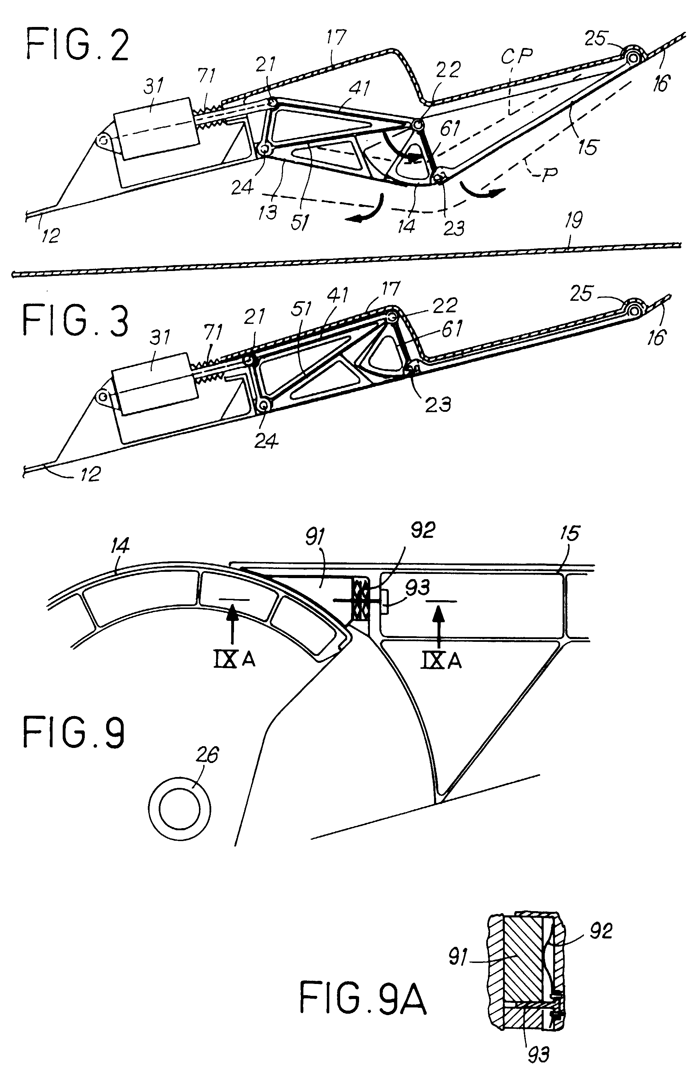

Un ensemble 1 de panneaux mobiles articulés 13, 14, 15 est interposé entre les parois horizontales supérieures fixes 12 et 16. Cet ensemble déformable 1, qui caractérise la présente invention, est représenté en position déployée sur les Figures 1 et 2, en formant un col sonique face à la paroi opposée 19. Ce même ensemble déformable 1 est représenté en position escamotée sur la Figure 3, l'ensemble des panneaux mobiles articulés 13,14,15 étant alors placé dans l'alignement de la paroi fixe horizontale supérieure amont 12 et assurant une continuité avec la paroi horizontale supérieure aval fixe 16.

Les Figures 2 et 3 montrent un carter extérieur 17 qui a été omis sur la Figure 1 et assure la protection de l'ensemble déformable 1. Le carter 17 définit un logement à l'intérieur duquel les divers éléments de l'ensemble déformable 1 peuvent être disposés lorsque cet ensemble 1 est en position rétractée.

Dans la présente description, on a considéré à titre d'exemple le cas où un col sonique est formé entre une paroi fixe plane 19 et un ensemble déformable 1 interposé dans la paroi fixe opposée 12, 16, l'ensemble déformable 1 pouvant être soit en position déployée (Figures 1 et 2), soit en position éclipsée (Figure 3).

L'invention s'applique toutefois également au cas d'une tuyère comprenant deux ensembles déformables 1 placés en vis-à-vis et interposés respectivement dans les parois horizontales fixes opposées 12, 19. Dans ce cas, il est possible d'obtenir une section de passage très réduite au niveau du col sonique ou, pour certaines applications, de réduire le déplacement des panneaux articulés mobiles de chacun des ensembles déformables 1 placés en vis-à-vis. Chacun des ensembles déformables peut présenter une structure et un fonctionnement analogues à ce qui va être décrit ci-après en référence à l'ensemble déformable 1 des Figures 1 à 3.

L'ensemble déformable 1 est composé de trois panneaux articulés mobiles 13, 14, 15. Le premier panneau 13 est constitué par un panneau amont plan dont une extrémité amont est articulée autour d'un axe 24 par rapport à la paroi amont horizontale fixe 12. Le deuxième panneau 14 est constitué par un panneau intermédiaire arqué, en forme de portion de cylindre, qui est capable de s'escamoter derrière le panneau amont plan 13 dans la position éclipsée de la Figure 3. Le troisième panneau 15 est constitué par un panneau aval plan dont une extrémité amont est articulée autour d'un axe 23 par rapport au panneau intermédiaire arqué 14 et une extrémité aval est articulée autour d'un axe 25 par rapport à la paroi fixe aval 16.

Le panneau intermédiaire arqué 14 est lui-même articulé autour d'un axe 22 qui présente une position prédéterminée par rapport au panneau amont plan 13. L'axe 22, dans le mode de réalisation des Figures 1 à 3, est ainsi relié au panneau amont 13, au voisinage de l'articulation 24, par des plaques ou tiges 51, 52, 53.

Un ensemble de vérins 31 à 33 permet d'agir sur le panneau amont 13 et l'axe d'articulation 22 pour déplacer l'ensemble des trois panneaux articulés 13, 14, 15. Les vérins 31 à 33, qui peuvent par exemple être constitués par des vérins électriques à vis, sont disposés parallèlement à la paroi 12, qui est elle-même parallèle aux axes 21 à 24, et comprennent des tiges de vérin 31a, 32a, 33a agissant au niveau d'un axe 21, parallèle aux axes 22 à 24, sur des pièces 41, 42, 43 par exemple en forme d'équerre, qui sont solidaires à la fois du panneau amont 13 et de l'axe 22 d'articulation du panneau arqué 14.

La partie cylindrique du panneau arqué 14 peut elle-même être reliée à l'axe d'articulation 22 par des plaques ou tiges de liaison 61, 62, 63. Le panneau intermédiaire 14 permet le rattrapage de longueur dû au déplacement des panneaux extrêmes 13, 15 et des variations de longueur dues aux dilatations résiduelles. La dimension du panneau 14 est fonction de la position des vérins 31 à 33.

Des soufflets d'étanchéité 71 (Figures 2 et 3) sont disposés autour des tiges des vérins 31 à 33 pour assurer une étanchéité entre le corps des vérins 31 à 33 et la paroi fixe 12 d'une part, et le carter extérieur 17 d'autre part. En revanche, il n'est pas recherché la création d'une étanchéité totale au niveau des panneaux mobiles 13 à 15. En effet, compte tenu des niveaux de pression présents dans une chambre de combustion de grande dimension et de la température élevée qui règne dans une telle chambre, les déformations induites sur les pièces soumises à de telles températures peuvent être très élevées et la réalisation de joints efficaces présente des difficultés. C'est pourquoi l'étanchéité est reportée au niveau des tiges de vérin par des soufflets 71 agissant entre les éléments de la paroi fixe 12 et le carter extérieur fixe 17.

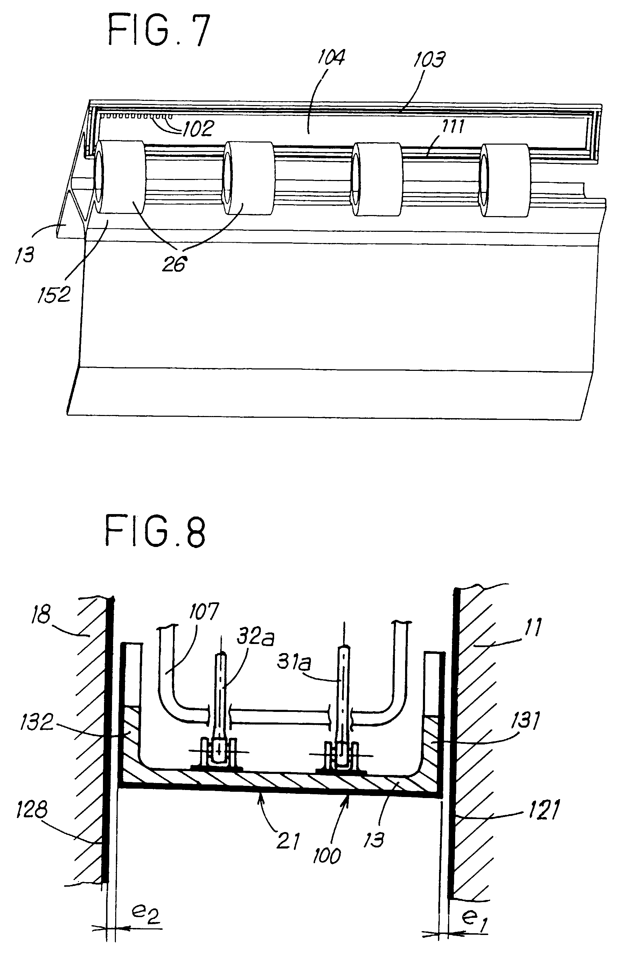

Dans ces conditions, une pression ou contre-pression s'installe derrière les panneaux 13 à 15 de l'ensemble déformable 1 constituant le col à géométrie variable. Cette pression ou contre-pression est calibrée par les espaces e₁, e₂ définis entre les flancs, tels que les flancs 131, 132 de la Figure 8, de tous les panneaux mobiles 13, 14, 15, tels que le panneau 13 et respectivement les parois latérales verticales fixes 11, 18.

La contre-pression, ajustée grâce aux calibrages des espaces e₁, e₂, est définie de manière à minimiser les contraintes sur chacun des panneaux 13, 14, 15 et optimiser les charges appliquées aux vérins 31 à 33. Les déformations engendrées par les panneaux 13, 14, 15 au niveau des espaces de calibrage e₁, e₂ font faiblement varier la pression interne à l'ensemble déformable 1 et restent dans une tolérance acceptable sur les charges induites sur les vérins 31 à 33.

Sur la Figure 2, on a représenté en pointillés l'évolution de la pression P dans la chambre et au niveau du col, jusqu'à l'articulation 25 de raccordement à la paroi fixe 16, et l'évolution de la contre-pression CP, derrière les panneaux 13 à 15 définissant le col à géométrie variable, dans le logement du carter 17 contenant le mécanisme de commande de l'ensemble déformable 1. On constate que la contre-pression CP est à peu près uniforme tout le long des panneaux 13 à 15.

L'installation d'une contre-pression derrière les panneaux 13 à 15, sur leur face opposée à la chambre de combustion et à l'espace de circulation des gaz présente notamment les avantages suivants :
- les charges appliquées sur les vérins 31 à 33 sont réduites ;
- l'absence d'étanchéité entre les parois latérales 11, 18 et les bords tombés des panneaux 13 à 15 évite des risques de blocage en cas de déformation des panneaux mobiles 13 à 15 ;
- on peut provoquer une baisse des températures derrière le col à géométrie variable, ce qui évite l'intégration d'un système de refroidissement pour la structure fixe de l'avion incorporant la tuyère.

Il est à noter qu'une régulation de pression derrière le col à géométrie variable peut être envisagée, suivant les déplacements des panneaux 13 à 15, ou au cours de la combustion, par intégration de trappes installées sur les panneaux mobiles 13 à 14, ou encore par application d'une contre-pression indépendante, qui n'est plus créée par la simple existence d'espaces de calibrage e₁, e₂, mais fait appel à un système de réservoir d'un fluide tel que de l'azote ou encore à l'utilisation des gaz d'échappement d'une turbine incorporée dans l'avion équipé de la tuyère.

La seule liaison séparant l'ambiance interne de la structure d'un avion équipé de la tuyère selon l'invention et les conditions thermiques et de pression régnant dans la chambre de combustion ou la partie amont du col à géométrie variable, se situe au niveau des vérins 31 à 33 d'entraînement des panneaux mobiles 13 à 15. Dès lors que les mouvements des tiges de vérin 31a, 32a, 33a restent de faible amplitude, les soufflets 71 peuvent être réalisés sans difficulté particulière en tenant compte (i) du faible débattement des tiges de vérin, (ii) des niveaux de pression de la cavité servant de logement au mécanisme de l'ensemble déformable 1, c'est-à-dire des niveaux de pression (ou contre-pression) régnant entre le carter 17 et les panneaux mobiles 13 à 15, ces niveaux de pression étant faibles par rapport à ceux de la chambre de combustion, et (iii) de la température relativement faible de cette cavité.

Si, comme indiqué précédemment en référence à la Figure 8, des espaces libres e₁, e₂ sont ménagés entre les bords tombés tels que 131, 132 des panneaux 13 à 15 et les parois verticales fixes 11 et 18, pour faciliter le calibrage de la contre-pression régnant derrière les panneaux mobiles 13 à 15, dans la cavité recevant le mécanisme de manoeuvre de ces panneaux mobiles 13 à 15, il est préférable qu'une étanchéité soit réalisée au niveau des liaisons entre les différents panneaux mobiles 13 à 15, et notamment au niveau des chevauchements possibles entre le panneau intermédiaire arqué 14 et les panneaux plans amont 13 ou aval 15.

Les Figures 9 et 9A montrent un exemple d'étanchéité réalisée entre les panneaux 14 et 15 (qui peut être identique pour la liaison entre les panneaux 14 et 13), cette étanchéité étant assurée par des joints racleurs 91 coopérant avec des ressorts 92 et munis de guides 93 empêchant des déplacements des joints 91 dans le sens transversal.

Les joints racleurs 91 peuvent être constitués en matériau composite ou carbone avec un revêtement facilitant le glissement avec la pièce métallique en vis-à-vis (paroi cylindrique du panneau intermédiaire 14), ou peuvent encore être constitués d'une céramique protégée thermiquement par une barrière de tube de refroidissement.

Les ressorts 92, placés dans des logements du panneau, par exemple 15, sur lequel sont montés les joints racleurs 91, permettent l'appui permanent des joints 91 sur l'élément en vis-à-vis (panneau arqué 14).

Il a été mentionné plus haut que le niveau de température dans la cavité située derrière les panneaux mobiles 13 à 15 restait modéré, ce qui évite notamment de refroidir la structure fixe de l'avion ou engin équipé de la tuyère.

Compte tenu des températures élevées rencontrées au niveau de la chambre de combustion, ce résultat est obtenu grâce à un système de refroidissement des faces des panneaux 13 à 15 situées du côté de la chambre de combustion. Le système de refroidissement 100 est représenté de façon symbolique sur la Figure 8 par des traits gras. Les faces des parois latérales 11, 18 situées en regard des panneaux mobiles 13,14,15 comportent également des systèmes de refroidissement 121, 128 respectivement représentés de façon symbolique en traits gras sur la Figure 8. Le système de refroidissement 100 des panneaux mobiles 13 à 15 s'étend également au niveau des bords tombés 131, 132 des flancs des panneaux mobiles 13 à 15 contribuant à définir les espaces de calibrage de largeur e₁, e₂.

Au passage à travers les espaces libres de calibrage de largeur e₁, e₂, le débit d'air chaud est refroidi à la fois par les bords tombés des flancs des panneaux mobiles et par les parois latérales fixes. Ceci permet de faire descendre la température jusqu'à des niveaux thermiques acceptables par des matériaux métalliques de type Inconel par exemple.

Un système de refroidissement complémentaire indépendant 107 peut être introduit le cas échéant derrière les panneaux mobiles 13 à 15, dans la cavité comportant le mécanisme d'entraînement de ces panneaux mobiles.

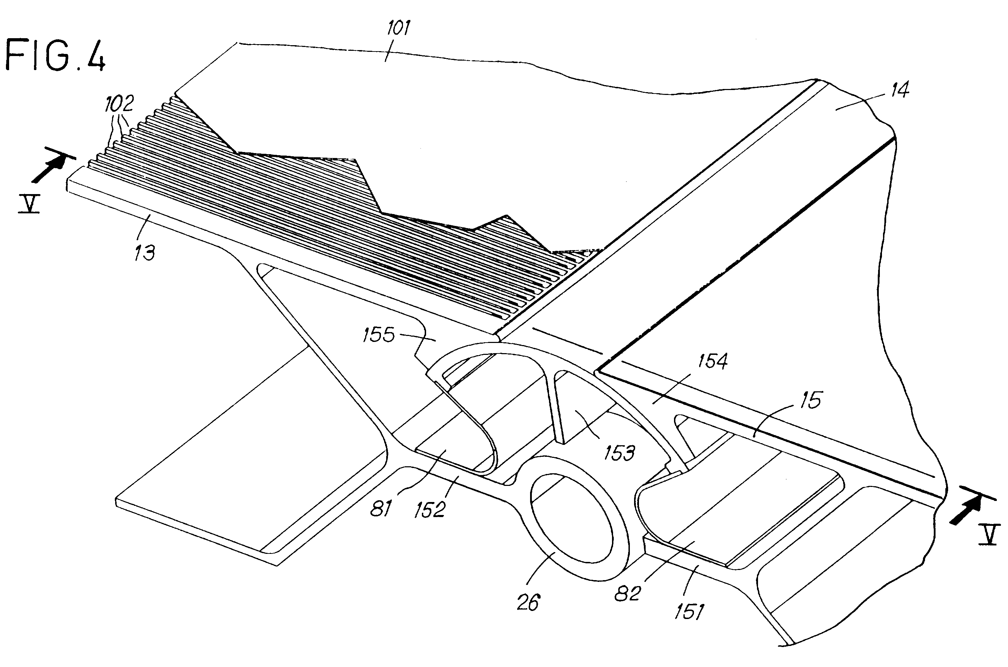

On décrira maintenant en référence aux Figures 4 à 7 un mode particulier de réalisation d'un ensemble déformable de panneaux mobiles articulés 13 à 15 pour constituer dans une tuyère un profil pouvant se projeter à l'intérieur de la veine de gaz chauds, pour constituer un col, un obstacle ou une partie convergente ou divergente à géométrie variable, ce mode de réalisation comportant des moyens de refroidissement des panneaux articulés 13 à 15.

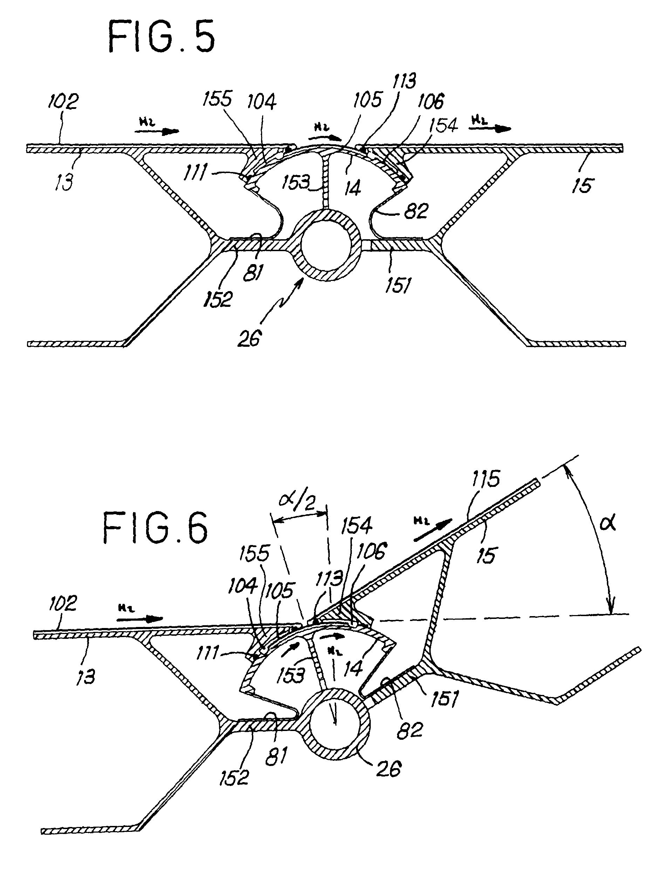

Dans le mode de réalisation des Figures 4 à 7, on retrouve, comme dans le mode de réalisation des Figures 1 à 3, un panneau amont plan 13, un panneau intermédiaire 14 en forme de portion de cylindre et un panneau aval plan 15. On n'a pas représenté à nouveau les divers axes d'articulation 21, 24, 25, ni les vérins de commande 31 à 33, qui peuvent être semblables aux éléments décrits en référence aux Figures 1 à 3. Sur les Figures 4 à 7, on a représenté un axe tubulaire 26, qui joue le rôle de l'axe 22 des Figures 1 à 3, et se trouve solidaire de la structure du panneau plan amont 13 et coopère avec la structure du panneau intermédiaire arqué 14, et un panneau aval plan 15 qui, au lieu d'être articulé par son extrémité amont directement sur le panneau intermédiaire 14, présente d'une part une paroi amont 151 pouvant pivoter autour de l'axe 26, et d'autre part une extrémité amont 154 munie d'une cavité 106 et présentant une face inférieure qui épouse la forme de la surface extérieure du panneau intermédiaire 14, d'une façon analogue à l'extrémité aval 155 du panneau plan amont 13 qui comporte également une cavité 104 et présente une face inférieure qui épouse la forme de la surface extérieure du panneau intermédiaire 14. Dans le cas de la réalisation des Figures 4 à 7, le panneau intermédiaire 14 peut ainsi s'éclipser quasiment entièrement sous l'ensemble des panneaux plans amont 13 et aval 15 (Figure 6), et non plus sous le seul panneau amont 13 comme dans le cas de la Figure 3. On notera par ailleurs que dans la réalisation particulière des Figures 4 à 7, le panneau intermédiaire 14 est escamoté sous les panneaux plans amont 13 et aval 15 non pas lorsque ceux-ci sont alignés (comme dans le cas de la Figure 2) mais lorsque ceux-ci forment entre eux un angle différent de 180°. Ceci montre que l'invention n'est pas limitée à un mode de réalisation particulier de col à géométrie variable dans lequel l'escamotage du panneau intermédiaire ne s'effectue que dans une position alignée des panneaux amont 13 et aval 15. On notera toutefois que, dans tous les cas, le déplacement de l'ensemble des panneaux mobiles 13 à 15 s'effectue par un ensemble unique de vérins situés dans un même plan, et fait appel à une cinématique mettant en jeu exclusivement des rotations des panneaux pour rattraper les différences de longueur introduites par les déformations, ce qui signifie une simplicité de mouvements et un risque de fuites réduit.

Le mode de réalisation des Figures 4 à 7 est particulièrement concu de manière à pouvoir intégrer facilement un système de refroidissement des panneaux mobiles 13 à 15.

Ainsi, on voit sur la Figure 4 des canaux 102 de refroidissement disposés dans le sens longitudinal du panneau amont plan 13, et recouverts d'une plaque mince 101 constituant une peau de recouvrement formant la face du panneau 13 qui est en contact avec les gaz chauds. Le panneau intermédiaire arqué 14 comprend de la même façon des canaux de refroidissement 105 formés parallèlement à la surface cylindrique convexe externe en étant recouverts d'une plaque mince (Figures 5 et 6). Le panneau aval plan 15 peut être réalisé de la même façon que le panneau amont 13, avec des canaux de refroidissement longitudinaux 115 recouverts d'une plaque mince. Comme dans le cas du mode de réalisation des Figures 1 à 3, les divers panneaux 13, 14, 15 sont de préférence rigidifiés par des structures allégées définissant des alvéoles.

On notera que selon l'invention, dans le mode de réalisation des Figures 4 à 7, il existe une continuité de passage du fluide de refroidissement entre les panneaux articulés 13 à 15, c'est-à-dire des canaux 102 aux canaux 105 et des canaux 105 aux canaux 115, sans qu'il soit nécessaire de rajouter des tuyauteries de liaison ou des conduites flexibles supplémentaires, ce qui contribue à réduire la masse de l'ensemble. Les efforts peuvent ainsi être transmis entre les panneaux 13, 14, 15 tout à fait indépendamment du circuit de liaison des canaux de refroidissement.

Le fluide de refroidissement, qui peut être par exemple de l'hydrogène liquide, cryogénique ou de l'hydrogène gazeux, circule dans les canaux de refroidissement 102, puis à travers la cavité 104 (Figure 7) qui est délimitée à sa périphérie par un joint 111, par exemple métallique, placé dans un logement de joint 103 entourant la cavité 104 formée dans l'extrémité aval 155 du panneau amont 13 et ouverte face à une partie de la surface extérieure du panneau arqué 14. Le fluide de refroidissement pénètre ensuite dans les canaux de refroidissement 105 du panneau intermédiaire arqué 14 pour ressortir par une deuxième partie ouverte de la surface extérieure du panneau arqué 14, et pénétrer dans la cavité 106 formée dans l'extrémité amont 154 du panneau aval 15 et ouverte face à la deuxième partie ouverte de la surface extérieure du panneau arqué 14. Un joint 113 est disposé autour de la cavité 106 de passage du fluide de la même façon que le joint 111 autour de la cavité 104. Les joints 111, 113 peuvent le cas échéant être eux-mêmes subdivisés en plusieurs joints distincts, des joints principaux étant disposés parallèlement à l'axe 26, et des joints complémentaires étant disposés perpendiculairement à ces joints principaux aux extrémités latérales des panneaux 13, 15.

Le panneau intermédiaire 14 s'auto-aligne en fonction de l'angle de rotation du panneau aval 15 par rapport au panneau amont 13. Le panneau intermédiaire 14 qui pivote par une plaque de liaison 153 autour de l'axe tubulaire 26, se déplace d'un angle α/2 égal à la moitié de l'angle α formé par les panneaux 13 et 15 lorsque le panneau 15 a pivoté par rapport au panneau 13 (Figure 6).

Des ressorts d'équilibrage 81, 82, à section en forme de U ou de V sont interposés, pour le ressort 81 entre la plaque 152 du panneau 13 et l'extrémité amont du panneau arqué 14, et pour le ressort 82 entre la plaque 151 et l'extrémité aval du panneau arqué 14. Ces ressorts 81, 82 permettent précisément un auto-centrage du panneau intermédiaire 14 pour chaque position angulaire a entre les panneaux amont 13 et aval 15. Ceci contribue à limiter les longueurs de passage du fluide de refroidissement au sein du panneau intermédiaire 14 (le fluide de refroidissement ne circulant que dans des canaux formés dans la partie centrale du panneau 14), à diminuer l'angle de frottement entre les panneaux extrêmes 13, 15 et le panneau intermédiaire 14 et à minimiser l'angle d'encombrement du panneau intermédiaire 14.

## Revendications

1. Tuyère à col à géométrie variable, comprenant des parois fixes (11, 12, 18, 19) définissant une chambre de combustion de section rectangulaire ou carrée, et au moins un ensemble déformable (1) de panneaux mobiles articulés (13, 14, 15) reliés aux parois fixes (11, 12, 18) pour définir de façon sélective un col sonique modifiant la section de passage des gaz chauds issus de la chambre de combustion,
caractérisée en ce que l'ensemble déformable (1) comprend au moins un panneau amont plan (13) dont une extrémité amont est articulée autour d'un axe (24) par rapport à une paroi fixe amont (12) de la tuyère, un panneau intermédiaire arqué (14) en forme de portion de cylindre, capable de s'escamoter derrière le panneau amont plan (13) et un panneau aval plan (15) dont une extrémité amont est articulée autour d'un axe (23) par rapport au panneau intermédiaire arqué (14) et une extrémité aval est articulée autour d'un axe (25) par rapport à une paroi fixe aval (16) de la tuyère, en ce que le panneau intermédiaire arqué (14) est articulé autour d'un axe (22 ; 26) présentant une position prédéterminée par rapport au panneau amont plan (13) et en ce que les mouvements de déplacement des panneaux (13, 14, 15) de l'ensemble déformable sont commandés à partir d'un système d'entraînement unique (31 à 33) agissant sur le panneau amont plan (13).

2. Tuyère selon la revendication 1, caractérisée en ce que le panneau intermédiaire arqué est également conçu de manière à pouvoir s'escamoter partiellement derrière le panneau aval plan (15).

3. Tuyère selon la revendication 1 ou 2, caractérisée en ce que le système d'entraînement unique comprend au moins deux vérins (31, 32) situés dans un même plan parallèle aux axes (22 à 26) d'articulation des différents panneaux (13, 14, 15) de l'ensemble déformable (1).

4. Tuyère selon la revendication 3, caractérisée en ce que les vérins (31 à 33) sont du type vérins électriques à vis.

5. Tuyère selon la revendication 3 ou 4, caractérisée en ce qu'elle comprend des soufflets d'étanchéité (71) disposés autour des tiges des vérins (31 à 33).

6. Tuyère selon l'une quelconque des revendications 1 à 5, caractérisée en ce que les panneaux mobiles articulés (13, 14, 15) sont munis de canaux de refroidissement (102) parcourus par un fluide de refroidissement.

7. Tuyère selon la revendication 6, caractérisée en ce que les panneaux mobiles articulés (14) comprennent chacun une cavité (104, 106) délimitée par des joints (111 et 113), située au voisinage du panneau mobile adjacent et assurant le passage du fluide de refroidissement entre les canaux des différents panneaux (13 à 15).

8. Tuyère selon l'une quelconque des revendications 1 à 7, caractérisée en ce que des ressorts d'équilibrage (81, 82) sont interposés entre le panneau intermédiaire arqué (14) et chacun des panneaux plans amont et aval (13, 15).

9. Tuyère selon l'une quelconque des revendications 1 à 8, caractérisée en ce que des joints racleurs (91) sont interposés entre les panneaux plans amont et aval (13, 15) et le panneau intermédiaire arqué (14).

10. Tuyère selon la revendication 9, caractérisée en ce que les joints racleurs (91) comprennent chacun un élément (92) formant ressort et un joint en matériau composite muni d'un revêtement facilitant le glissement.

11. Tuyère selon l'une quelconque des revendications 1 à 10, caractérisée en ce que des espaces libres calibrés de faible largeur (e₁, e₂) sont ménagés entre des parois latérales fixes (11, 18) et des bords tombés (131, 132) des flancs latéraux des panneaux mobiles articulés (13, 14, 15) de manière à permettre le passage d'un débit prédéterminé de gaz chauds assurant l'établissement d'une contre-pression derrière les panneaux mobiles (13 à 15), et en ce que des circuits de refroidissement parcourus par un fluide de refroidissement sont disposés au niveau des flancs latéraux des panneaux mobiles articulés (13, 14, 15) et des parois latérales fixes (11, 18).

## Patentansprüche

1. Düse mit einem Hals mit veränderlicher Geometrie, die ortsfeste Wände (11, 12, 18, 19), welche eine Brennkammer mit rechteckigem oder quadratischem Querschnitt definieren, und mindestens eine verformbare Einheit (1) aus angelenkten, beweglichen Platten (13, 14, 15) aufweist, die mit den ortsfesten Wänden (11, 12, 18) verbunden sind, um wahlweise einen Schallhals zu definieren, der den Durchlaßquerschnitt für die aus der Brennkammer kommenden heißen Gase verändert,
dadurch gekennzeichnet, daß die verformbare Einheit (1) mindestens eine stromaufwärts liegende, ebene Platte (13), deren stromaufwärts liegendes Ende in Bezug auf eine stromaufwärts liegende, ortsfeste Platte (12) der Düse um eine Achse (24) schwenkbar gelagert ist, eine gewölbte Zwischenplatte (14) in Form eines Zylinderabschnitts, die hinter die stromaufwärts liegende, ebene Platte (13) zurückgezogen werden kann, und eine stromabwärts liegende, ebene Platte (15) aufweist, deren stromaufwärts liegendes Ende in Bezug auf die gewölbte Zwischenplatte (14) um eine Achse (23) und deren stromabwärts liegendes Ende in Bezug auf eine stromabwärts liegende, ortsfeste Platte (16) der Düse um eine Achse (25) schwenkbar gelagert ist, daß die gewölbte Zwischenplatte (14) um eine Achse (22; 26) schwenkbar gelagert ist, die in Bezug auf die stromaufwärts liegende, ebene Platte (13) eine vorbestimmte Position aufweist, und daß die Verschiebungsbewegungen der Platten (13, 14, 15) der verformbaren Einheit ausgehend von einem einzigen Antriebssystem (31 bis 33) gesteuert werden, das auf die stromaufwärts liegende, ebene Platte (13) einwirkt.

2. Düse nach Anspruch 1, dadurch gekennzeichnet, daß die gewölbten Zwischenplatte ebenfalls so ausgebildet ist, daß sie teilweise hinter die stromabwärts liegende, ebene Platte (15) zurückgezogen werden kann.

3. Düse nach Anspruch 1 oder 2, dadurch gekennzeichnet, daß das einzige Antriebssystem mindestens zwei Stellantriebe (31, 32) aufweist, die sich in einer gleichen Ebene parallel zu den Gelenkachsen (22 bis 26) der verschiedenen Platten (13, 14, 15) der verformbaren Einheit (1) befinden.

4. Düse nach Anspruch 3, dadurch gekennzeichnet, daß die Stellantriebe (31 bis 33) von der Art elektrischer Schraubentrieb sind.

5. Düse nach Anspruch 3 oder 4, dadurch gekennzeichnet, daß sie Dichtungsmanschetten (71) besitzt, die um die Stäbe der Stellantriebe (31 bis 33) herum angeordnet sind.

6. Düse nach einem beliebigen der Ansprüche 1 bis 5, dadurch gekennzeichnet, daß die schwenkbar gelagerten, beweglichen Platten (13, 14, 15) mit Kühlkanälen (102) ausgestattet sind, durch die ein Kühlfluid fließt.

7. Düse nach Anspruch 6, dadurch gekennzeichnet, daß die schwenkbar gelagerten, beweglichen Platten (14) je einen von Dichtungen (111 und 113) begrenzten Hohlraum (104, 106) aufweisen, der sich in der Nähe der benachbarten beweglichen Platte befindet und den Durchfluß des Kühlfluids zwischen den Kanälen der verschiedenen Platten (13 bis 15) gewährleistet.

8. Düse nach einem beliebigen der Ansprüche 1 bis 7, dadurch gekennzeichnet, daß Ausgleichsfedern (81, 82) je zwischen die gewölbte Zwischenplatte (14) und die stromaufwärts liegende bzw. die stromabwärts liegende, ebene Platte (13, 15) eingefügt sind.

9. Düse nach einem beliebigen der Ansprüche 1 bis 8, dadurch gekennzeichnet, daß Abstreifer (91) zwischen die stromaufwärts liegende und die stromabwärts liegende Platte (13, 15) und die gewölbte Zwischenplatte (14) eingefügt sind.

10. Düse nach Anspruch 9, dadurch gekennzeichnet, daß die Abstreifer (91) je ein eine Feder bildendes Element (92) und eine Dichtung aus Verbundmaterial aufweisen, die mit einer Verkleidung versehen ist, welche das Gleiten erleichtert.

11. Düse nach einem beliebigen der Ansprüche 1 bis 10, dadurch gekennzeichnet, daß kalibrierte Freiräume (e₁, e₂) geringer Breite zwischen ortsfesten Seitenwänden (11, 18) und Seitenkanten (131, 132) der Seitenflanken der angelenkten beweglichen Platten (13, 14 15) ausgebildet sind, um den Durchlaß eines vorbestimmten Durchsatzes von heißen Gasen zu erlauben, die die Erzeugung eines Gegendrucks hinter den beweglichen Platten (13 bis 15) gewährleisten, und daß von einem Kühlfluid durchflossene Kühlkreise in Höhe der Seitenflanken der angelenkten beweglichen Platten (13, 14, 15) und der ortsfesten Seitenwände (11, 18) angeordnet sind.

## Claims

1. Nozzle with variable throat geometry comprising stationary walls (11, 12, 18, 19) defining a combustion chamber of rectangular or square cross section, and at least one deformable assembly (1) of articulated moving panels (13, 14, 15) connected to the stationary walls (11, 12, 18) to selectively define a sonic throat altering the cross section for the passage of hot gases from the combustion chamber,
characterized in that the deformable assembly (1) comprises at least one flat upstream panel (13), an upstream end of which is articulated about an axle (24) with respect to an upstream stationary wall (12) of the nozzle, a bowed intermediate panel (14) in the shape of a portion of a cylinder capable of retracting behind the flat upstream panel (13) and a flat downstream panel (15), an upstream end of which is articulated about an axle (23) with respect to the bowed intermediate panel (14), and a downstream end of which is articulated about an axle (25) with respect to a downstream stationary wall (16) of the nozzle, in that the bowed intermediate panel (14) is articulated about an axle (22; 26) which has a predetermined position with respect to the flat upstream panel (13), and in that the movements for shifting the panels (13, 14, 15) of the deformable assembly are controlled from a single drive system (31 to 33) acting on the flat upstream panel (13).

2. Nozzle according to Claim 1, characterized in that the bowed intermediate panel is also designed so that it can be partially retracted behind the flat downstream panel (15).

3. Nozzle according to Claim 1 or 2, characterized in that the single drive system comprises at least two rams (31, 32) located in one and the same plane parallel to the axles (22 to 26) which articulate the various panels (13, 14, 15) of the deformable assembly (1).

4. Nozzle according to Claim 3, characterized in that the rams (31 to 33) are of the electric screw jack type.

5. Nozzle according to Claim 3 or 4, characterized in that it comprises sealing gaiters (71) arranged around the rods of the rams (31 to 33).

6. Nozzle according to any one of Claims 1 to 5, characterized in that the articulated moving panels (13, 14, 15) have cooling ducts (102) through which a coolant flows.

7. Nozzle according to Claim 6, characterized in that the articulated moving panels (14) each comprise a cavity (104, 106) delimited by seals (111 and 113), this cavity being located close to the adjacent moving panel and allowing the coolant to pass between the ducts of the various panels (13 to 15).

8. Nozzle according to any one of Claims 1 to 7, characterized in that balancing springs (81, 82) are inserted between the bowed intermediate panel (14) and each of the, upstream and downstream, flat panels (13, 15).

9. Nozzle according to any one of Claims 1 to 8, characterized in that wiper seals (91) are inserted between the upstream and downstream flat panels (13, 15) and the bowed intermediate panel (14).

10. Nozzle according to Claim 9, characterized in that the wiper seals (91) each comprise an element (92) forming a spring and a seal made of composite material provided with a coating to make sliding easier.

11. Nozzle according to any one of Claims 1 to 10, characterized in that narrow calibrated empty spaces (e₁, e₂) are formed between the stationary side walls (11, 18) and turned-down edges (131, 132) of the side flanks of the articulated moving panels (13, 14, 15) so as to allow a predetermined flow of hot gases to pass in order to establish a back-pressure behind the moving panels (13 to 15), and in that cooling circuits through which a coolant flows are provided in the region of the side flanks of the articulated moving panels (13, 14, 15) and of the stationary side walls (11, 18).
